# EUROPÄISCHE PATENTSCHRIFT

(11) **EP 2 222 491 B1**
(45) Veröffentlichungstag und Bekanntmachung des Hinweises auf die Patenterteilung: **12.10.2011**
(21) Anmeldenummer: 09781674.8
(22) Anmeldetag: 10.08.2009
(51) Int. Cl.: B60J 10/00, B60J 10/08

(54) **VERFAHREN ZUR HERSTELLUNG EINES DICHTUNGSPROFILS FÜR EIN KRAFTFAHRZEUG UND EIN SOLCHES DICHTUNGSPROFIL**
METHOD FOR PRODUCING A SEALING PROFILE FOR A MOTOR VEHICLE AND SUCH A SEALING PROFILE
PROCEDE DE FABRICATION D'UN PROFIL D'ETANCHEITE POUR UN VEHICULE AUTOMOBILE, AINSI QUE PROFIL D'ETANCHEITE

(30) Priorität: 05.11.2008 DE 102008055942
(43) Veröffentlichungstag der Anmeldung: 01.09.2010
(73) Patentinhaber: METZELER Automotive Profile Systems GmbH, 88131 Lindau (DE)
(72) Erfinder: EMERICH, Carin, 88131 Lindau (DE); WILLMANN, Matthias, 88079 Kressbronn (DE); LANGREHR, Michael, 88142 Wasserburg (DE)
(74) Vertreter: Schober, Christoph D.
(86) Internationale Anmeldenummer: PCT/EP2009/060347
(87) Internationale Veröffentlichungsnummer: WO 2010/052039

(56) Entgegenhaltungen:
- GB-A- 2 338 976
- JP-A- 62 125 934
- JP-A- 2002 274 187
- US-A- 5 127 193
- US-A1- 2004 157 013

## Beschreibung

Die vorliegende Erfindung betrifft ein Verfahren zur Herstellung eines sich in einer Längsrichtung erstreckenden Dichtungsprofils für ein Kraftfahrzeug, wobei das Dichtungsprofil aus einem elastomeren Werkstoff extrudiert wird. Ferner betrifft die Erfindung ein solches Dichtungsprofil.

Das Dichtungsprofil gemäß der vorliegenden Erfindung dient insbesondere zum Abdichten einer Kraftfahrzeugtür gegenüber der Karosserie des Kraftfahrzeugs. Für diesen Zweck umfasst das Dichtungsprofil im Querschnitt gesehen vorzugsweise einen ersten Dichtungsabschnitt, einen zweiten Dichtungsabschnitt und einen Befestigungsabschnitt. Hierbei ist der Befestigungsabschnitt an einem Flansch der Tür festlegbar. Der erste Dichtungsabschnitt liegt bei geschlossener Tür an der Karosserie an und der zweite Dichtungsabschnitt dient zur Abdichtung und/oder Führung einer in der Tür angeordneten beweglichen Fensterscheibe und/oder zur Abdichtung einer feststehenden Fensterscheibe.

Ein derartiges Dichtungsprofil wird in der DE 10 2006 060 390 B3 beschrieben. Bei diesem bekannten Dichtungsprofil ist ein erster Dichtungsabschnitt mit einer äußeren Dichtlippe und einer inneren Dichtlippe versehen, die zur Abdichtung der Kraftfahrzeugtür gegenüber einem Dachabschnitt der Karosserie dienen. Ein zweiter Dichtungsabschnitt dient zum Abdichten einer in der Kraftfahrzeugtür angeordneten beweglichen Fensterscheibe, die in einem Kanal des zweiten Dichtungsabschnittes geführt ist. In dem Kanal sind Dichtlippen vorgesehen, die im geschlossenen Zustand der Fensterscheibe an dieser anliegen. Zwischen dem ersten Dichtungsabschnitt und dem zweiten Dichtungsabschnitt ist ein Befestigungsabschnitt vorgesehen, um das Dichtungsprofil an einem Flansch der Tür zu befestigen. Der Befestigungsabschnitt ist mittels einer kanalförmigen Aussparung auf den Flansch aufsteckbar. Ferner weist der Befestigungsabschnitt Haltelippen im Bereich der Aussparung und einen eingebetteten Verstärkungsträger auf.

Das vorstehend beschriebene bekannte Dichtungsprofil zeichnet sich durch seine einteilige Struktur aus, so dass auf einfache Weise an der Karosserie und/oder der Kraftfahrzeugtür montiert werden kann. Allerdings ist es im Hinblick auf die Ausgestaltung moderner Karosserie- und Kraftfahrzeugtürformen mit teils starken Krümmungen erforderlich, dass die Dichtungsprofile mit sehr kleinen Radien gebogen werden müssen. Ferner werden hohe Anforderungen an ein optisch ansprechendes Erscheindungsbild gestellt, da die Dichtungsprofile von außerhalb des Kraftfahrzeugs sichtbar sind. Zudem soll eine möglicht einfache und automatisierte Montage erfolgen. So ist es unumgänglich, dass die Dichtungsprofile bereits vor der Montage zumindest annähernd den von der Karosserie vorgegebenen Verlauf aufweisen. Hierzu werden die Dichtungsprofile in einem Biegewerkzeug gebogen. Allerdings ergeben sich hierbei Grenzbereiche, wobei bei einer zu starken Biegung insbesondere im Bereich des Dichtungsabschnitts eine Wellenbildung auftreten kann, die die Dichtfunktion und das optische Erschienungsbild beeinträchtigen kann.

DE 697 31 729 T2 beschreibt eine Führungsschiene für eine bewegliche Fensterscheibe, insbesondere einer Kraftfahrzeugtür, welche leicht mit einem Flansch verbunden werden kann. Die Führungsschiene weist eine Armierung auf, die durch quer zur Längsrichtung verlaufende Öffnungen gekennzeichnet ist.

DE 85 19 013 U1 beschreibt einen Dichtstreifen, der zur Abdichtung von Öffnungen, wie Türöffnungen von Motorfahrzeugen eingesetzt wird. Der Dichtstreifen besteht aus einem U-profilförmigen Befestigungsabschnitt, der einen länglichen, rohrförmigen Dichtungsabschnitt aus flexiblem Material trägt. Der Dichtungsabschnitt weist eine Vielzahl von spannungsmindernden Gestaltungselementen auf, die sich quer zu seiner Hauptausdehnungsrichtung erstrecken, wodurch die Spannungen im Bereich der Gestaltungselemente herabgesetzt werden, wenn der Dichtstreifen um eine Achse gebogen wird. Dabei können die Gestaltungselemente als Riefen oder als Schlitze ausgebildet sein.

GB 2,338,976 A beschreibt eine Dichtung mit einem Befestigungsabschnitt und einem Dichtungsabschnitt, die in einem gebogenen, abzudichtenden Bereich angeordnet wird. Ein Schlitz ist mindestens in dem gebogenen Bereich zwischen Dichtungsabschnitt und Befestigungsabschnitt angebracht. Nach dem Verbiegen der Dichtung kann der Schlitz mittels Kleben wieder geschlossen werden. Weiterhin beschreibt GB 2,338,976 A ein Verfahren zur Herstellung einer solchen Dichtung.

US 2004/157013 A1 offenbart einen Dichtstreifen mit zwei Dichtungsabschnitten und einem zwischen den Dichtungsabschnitten angeordneten Befestigungsabschnitt. Der Dichtstreifen umfasst einen gebogenen Abschnitt und zwei gerade Abschnitte. Im Bereich des gebogenen Abschnitts ist an der Außenseite des Dichtungsabschnitts ein Schlitz vorgesehen.

US 5,127,193 A beschreibt einen Dichtstreifen, der entlang der Längsachse eine variable Breite aufweist. Um den Dichtungsabschnitt zu verbreitern, wird ein Schlitz eingebracht und der Dichtungsabschnitt entsprechend geweitet. Anschließend wird in den so definierten Hohlraum ein polymerer Werkstoff eingespritzt.

JP 62125934 A beschreibt einen Dichtstreifen, insbesondere zum Abdichten einer Tür eines Kraftfahrzeugs, der dafür geeignet ist, entlang eines gebogenen Abschnitts angebracht zu werden. Im gebogenen Bereich ist ein Schlitz vorgesehen, damit der Dichtungsabschnitt annähernd seine Form beibehalten kann.

JP 2002/274187 A beschreibt eine Führungsschiene einer bewegbaren Fensterscheibe, die sich leicht verformen lässt. Im Bereich eines Biegeabschnittes sind ein oder mehrere Schlitze vorgesehen, die entweder quer oder windschief zur Längsachse der Führungsschiene verlaufen.

Der Erfindung liegt die Aufgabe zugrunde, ein Verfahren zur Herstellung eines Dichtungsprofils für ein Kraftfahrzeug und ein solches Dichtungsprofil anzugeben, bei dem nach der Montage des Dichtungsprofils in der bestimmungsgemäßen Endlage eine reduzierte oder keine erkennbare Wellenbildung auftritt.

Zur Lösung dieser Aufgabe wird ein Verfahren gemäß Anspruch 8 und ein Dichtungsprofil gemäß Anspruch 1 vorgeschlagen. Bevorzugte Ausgestaltungen der Erfindung werden in den Ansprüchen 2 bis 7 und 9 bis 17 definiert.

Bei dem erfindungsgemäßen Verfahren zur Herstellung eines sich in einer Längsrichtung erstreckenden Dichtungsprofils für ein Kraftfahrzeug wird das Dichtungsprofil aus einem elastomeren Werkstoff extrudiert, und wenigstens abschnittsweise wird im Bereich eines mittels Biegung zu formenden Biegeabschnittes des Dichtungsprofils wenigstens ein Schlitz eingebracht, und das Dichtungsprofil wird im Bereich des Biegeabschnittes in die gewünschte Form gebogen.

Infolge des eingebrachten Schlitzes, beispielsweise durch Schneiden oder Stanzen, kommt es nach dem Biegen des vorgesehenen Biegeabschnitts des Dichtungsprofils im Rahmen der Herstellung und/oder der Montage zu einer lediglich geringen oder zu gar keiner Wellenbildung. Auf diese Weise kann das Dichtungsprofil seine Abdichtungs- und/oder Führungsfunktion und auch die Anforderungen an das optische Aussehen erfüllen.

Erstaunlicherweise wurde festgestellt, dass der Schlitz in eingebautem Zustand des Dichtungsprofils dessen vorbeschriebene Funktionen voll erfüllen kann und es zu keiner Beeinträchtigung, insbesondere auch nicht hinsichtlich der Dichtfunktion, kommt. Zudem ist es nicht unbedingt erforderlich, den Schlitz nach der Biegung oder nach vollendeter Montage zu verschließen oder anderweitig zu behandeln. Allerdings könnte der Schlitz beispielsweise mit einer Formmasse ausgespritzt oder verklebt werden.

Insbesondere wenn der Schlitz im Wesentlichen parallel und im Abstand zur neutralen Faser des Dichtungsprofils eingebracht wird, kann die neutrale Faser von dem herkömmlicherweise, hinsichtlich der Wellenbildung anfälligen Dichtungsabschnitt getrennt beziehungsweise entkoppelt werden, so dass es dann bei der Biegung des Dichtungsprofils zu keiner Wellenbildung oder nur zu einer geringen Wellenbildung kommt. Insbesondere kann so eine Wellenbildung im Bereich der Dichtlippen vermieden oder reduziert werden.

Der Schlitz soll auch frei von Bauteilen bleiben. So wird grundsätzlich kein Flansch oder ein ähnliches zur Befestigung dienendes Bauteil in den Schlitz eingeführt.

Grundsätzlich können auch mehrere Schnitte vorgesehen werden, vorzugsweise in der Längsrichtung beabstandet oder parallel zueinander. Vorteilhafterweise kann der Schlitz auch im Bereich der neutralen Faser eingebracht sein. Ferner kann die Biegung des Dichtungsprofils zur gewünschten Formgebung mit weiteren Verfahrensschritten in einer Taktanlage kombiniert werden, beispielsweise mit dem Beschneiden und/oder Ablängen des Dichtungsprofils.

Erfindungsgemäß wird der Schlitz in einen Verbindungsabschnitt des Dichtungsprofils eingebracht, wobei der Verbindungsabschnitt einen ersten Dichtungsabschnitt mit einem zweiten Dichtungsabschnitt verbindet. Dieser Verbindungsabschnitt kann sich beispielsweise im Querschnitt betrachtet vorteilhafterweise zwischen den beiden Dichtungsabschnitten befinden und kann beispielsweise einen Teil des Befestigungsabschnitts mit einschließen. Dadurch, dass der Verbindungsabschnitt in diesem Fall nicht die Dichtungsabschnitte des Dichtungsprofils umfasst, kommt es zu keiner Beeinträchtigung der Dichtfunktion, Führungsfunktion und/oder der Befestigung.

Grundsätzlich kann der Schlitz aber überall im Dichtungsprofil eingebracht werden, also auch in einem Funktionsbereich des Dichtungsprofils, wie beispielsweise in einem Dichtungsabschnitt oder in einem Befestigungsabschnitt.

Erfindungsgemäß wird der Schlitz in einer sich im Wesentlichen in der Längsrichtung des Dichtungsprofils erstreckenden Richtung eingebracht. Von Vorteil ist ferner, wenn der Schlitz im Wesentlichen parallel und im Abstand zur neutralen Faser des Dichtungsprofils eingebracht wird. Besonders bevorzugt wird der Schlitz dabei parallel zur neutralen Faser eingebracht. Auf diese Weise kann das Dichtungsprofil weiterhin seine Befestigungsfunktion in ausreichendem Maße erfüllen.

Hinsichtlich des Anbringungsortes des Schlitzes steht eine Vielzahl von Möglichkeiten offen, die sich im Wesentlichen an dem Radius der vorzunehmenden Biegung und der Einbindung des Biegeabschnittes in den weiteren Verlauf des Dichtungsprofils richtet. Bei bevorzugten Ausführungsformen kann der Schlitz über eine vorbestimmte Länge in dem Biegeabschnitt, in einem vorbestimmten Abstand von dem Biegeabschnitt entfernt und/oder mit dem Biegeabschnitt überlappend eingebracht werden.

Um während der Handhabung des Dichtungsprofils bei dem Herstellungsverfahren oder bei der anschließenden Montage eine unerwünschte Erweiterung des Schlitzes zu verhindern, wird in wenigstens einen Endbereich des Schlitzes eine in den Schlitz übergehende Ausnehmung eingebracht. Diese Ausnehmung kann beispielsweise etwa kreisförmig ausgebildet sein und dient somit als eine Art Entspannungsbohrung.

Vorteilhafterweise wird der Schlitz mittels eines Schneidmessers eingeschnitten, mittels Stanzen, mittels Fräsen oder mittels Bohren eingebracht. Weiterhin kann der Schlitz auch mittels eines Wasserstrahls usw. eingebracht werden.

In einer bevorzugten Weiterbildung kann der Schlitz in einem Anschlussbereich des Dichtungsprofils als einseitig offener Schlitz mit einem offenen Ende eingebracht werden und anschließend das Dichtungsprofil in dem Anschlussbereich mit wenigstens einem weiteren Dichtungsprofil verbunden werden, wobei das offene Ende des Schlitzes geschlossen wird. Somit ist nach Anbringen des weiteren Dichtungsprofils der Schlitz allseitig von dem Material des Dichtungsprofils und/oder des weiteren Dichtungsprofils begrenzt.

Zur Verbindung der Dichtungsprofile kann das Dichtungsprofil in ein Formwerkzeug eingelegt werden und zum Verbinden des weiteren Dichtungsprofils mit dem Dichtungsprofil eine Formmasse eingespritzt werden. Weiterhin kann vorgesehen werden, dass das Dichtungsprofil in ein Formwerkzeug eingelegt wird und in dem Anschlussbereich des Dichtungsprofils ein Formteil an das Dichtungsprofil angespritzt wird. Für den Fall, dass das Dichtungsprofil zur Anbringung entlang eines Randes einer Kraftfahrzeugtür vorgesehen ist, kann das weitere Dichtungsprofil für die Abdichtung der Fensterscheibe im Bereich der B-Säule und/oder ein noch weiteres Dichtungsprofil für die Abdichtung der Fensterscheibe im Bereich der C-Säule angebracht werden.

Hinsichtlich der Abmessungen des einzubringenden Schlitzes hat sich eine Länge von zwischen etwa 1 cm und etwa 20 cm, vorzugsweise zwischen etwa 5 cm und etwa 15 cm, als vorteilhaft erwiesen. Bezüglich der Breite des einzubringenden Schlitzes hat sich eine Breite zwischen etwa 0,1 mm und etwa 10 mm, vorzugsweise zwischen etwa 0,5 mm und etwa 2,0 mm, als vorteilhaft erwiesen.

Weiterhin kann vorgesehen sein, dass nach dem Biegen ein Bereich des gebogenen Abschnittes oder ein Bereich eines ungebogenen Abschnittes zugeschnitten beziehungsweise nachgestanzt wird. Auf diese Weise können alle Bereiche des Dichtungsabschnittes in die gewünschte Form gebogen und das Dichtungsprofil im gebogenen Zustand mit den gewünschten Abmessungen versehen werden. Beispielsweise kann so das Material, das herkömmlicherweise gestaucht werden würde, abgeschnitten werden.

Das erfindungsgemäße Dichtungsprofil für ein Kraftfahrzeug ist mittels Extrusion gefertigt und erstreckt sich in einer Längsrichtung. Das Dichtungsprofil weist einen ersten Dichtungsabschnitt, der bei geschlossener Tür an der Karosserie des Kraftfahrzeugs anliegt, einen zweiten Dichtungsabschnitt, der zur Abdichtung und/oder Führung einer Fensterscheibe dient, einen ersten Befestigungsabschnitt, der an einem Flansch einer Tür festlegbar ist, und einen zweiten Befestigungsabschnitt, der das Dichtungsprofil an der Tür befestigt, auf. Ferner weist das Dichtungsprofil einen Verbindungsabschnitt auf, der zwischen dem ersten Dichtungsabschnitt und dem zweitem Dichtungsabschnitt angeordnet ist. Dieses Dichtungsprofil weist wenigstens einen sich im Wesentlichen in der Längsrichtung erstreckenden und wenigstens abschnittsweise im Bereich eines mittels Biegung geformten Biegeabschnittes in den Verbindungsabschnitt eingebrachten Schlitz auf.

Das erfindungsgemäße Dichtungsprofil macht sich die Vorteile des oben erläuterten erfindungsgemäßen Verfahrens zunutze. Auf diese oben genannten Vorteile wird vollumgänglich verwiesen.

In bevorzugter Ausgestaltung ist der Schlitz allseitig begrenzt. Vorzugsweise ist die allseitige Umrandung des Schlitzes von dem Material des Dichtungsprofils und/oder dem weiteren Dichtungsprofil gebildet. Mit anderen Worten handelt es sich in einer bevorzugten Ausführungsform und insbesondere im Endzustand nach Anschluss des weiteren Dichtungsprofils im Anschlussbereich um einen allseitig geschlossen Schlitz. In einem vorherigen Zwischenstadium vor Anschluss des weiteren Dichtungsprofils kann der Schlitz einseitig offen ausgebildet sein.

Erfindungsgemäß ist der Schlitz in einem Verbindungsabschnitt angeordnet. Der Verbindungsabschnitt ist zwischen dem ersten Dichtungsabschnitt und dem zweiten Dichtungsabschnitt vorgesehen. Wie bereits weiter oben erläutert, dient der erste Dichtungsabschnitt dazu, einen Spalt zwischen der Kraftfahrzeugtür und der Karosserie abzudichten. Der zweite Dichtungsabschnitt ist zur Abdichtung und/oder Führung einer Fensterscheibe vorgesehen.

In vorteilhafter Ausgestaltung ist der Schlitz im Wesentlichen parallel und im Abstand zur neutralen Faser des Dichtungsprofils angeordnet. Auf diese Weise sind die herkömmlicherweise der Wellenbildung unterzogenen Abschnitte des Dichtungsprofils von der neutralen Faser entkoppelt.

Ferner kann der Schlitz über eine vorbestimmte Länge in dem Biegeabschnitt, in einem vorbestimmten Abstand von dem Biegeabschnitt entfernt und/oder mit dem Biegeabschnitt überlappend vorgesehen sein. Ferner kann in wenigstens einem Endbereich des Schlitzes eine in den Schlitz übergehende Ausnehmung eingebracht sein.

Hinsichtlich der Abmessungen des Schlitzes haben sich die oben im Zusammenhang mit dem erfindungsgemäßen Verfahren angegebenen Abmessungen für die Länge und/oder die Breite als vorteilhaft erwiesen.

Nachfolgend werden das erfindungsgemäße Dichtungsprofil und das Verfahren zu dessen Herstellung an Hand der beigefügten Zeichnungen weiter erläutert. Dabei zeigen schematisch:
- Fig. 1: eine Seitenansicht eines Kraftfahrzeugs;
- Fig. 2: eine Seitenansicht des erfindungsgemäßen Dichtungsprofils;
- Fig. 3: eine Seitenansicht des Dichtungsprofils gemäß Fig. 2 mit daran angeschlossenen zwei weiteren Dichtungsprofilen;
- Fig. 4: einen Schnitt durch das erfindungsgemäße Dichtungsprofil ge- mäß der Linie IV-IV in Fig. 1, und
- Fig. 5: einen Schlitz in dem erfindungsgemäßen Dichtungsprofil ge- mäß der Fig. 1 bis 4.

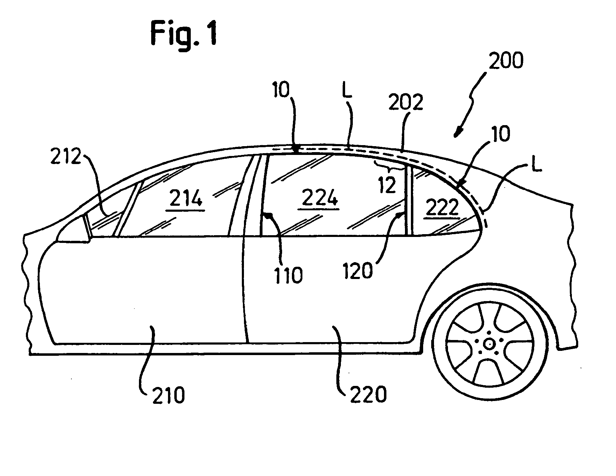

Das in Fig. 1 dargestellte Kraftfahrzeug 200 weist eine Karosserie 202 sowie eine in Fahrtrichtung vordere Tür 210 und eine hintere Tür 220 auf. Die vordere Tür 210 ist mit einer feststehenden, häufig als Dreieckscheibe bezeichneten Fensterscheibe 212 und einer bewegbaren Fensterscheibe 214 versehen. Ebenso ist die hintere Tür 220 mit einer feststehenden Fensterscheibe 222 beziehungsweise Dreieckscheibe und einer bewegbaren Fensterscheibe 224 versehen. Um die Türen 210, 220 in geschlossenem Zustand gegenüber der Karosserie 202 und die Fensterscheiben 212, 214, 222, 224 gegenüber den Türen 210, 220 abzudichten, finden Dichtungsprofile Anwendung. Im vorliegenden Fall soll im Weiteren das mit dem Bezugszeichen 10 gekennzeichnete Dichtungsprofil im Bereich der hinteren Tür 220 beschrieben werden.

Das aus einem elastomeren Werkstoff, wie zum Beispiel TPE oder EPDM, extrudierte Dichtungsprofil 10 erstreckt sich entlang einer Längsrichtung L, die dem Verlauf der Karosserie 202 folgt. So weist das Dichtungsprofil 10 im eingebauten Zustand insbesondere im Bereich eines Biegeabschnittes 12 eine Krümmung auf, die einen engen Radius aufweist. Je nach Krümmungsverlauf des Dichtungsprofils 10 können auch mehrere Biegeabschnitte 12 und/oder mehrere Schlitze 100 vorgesehen sein.

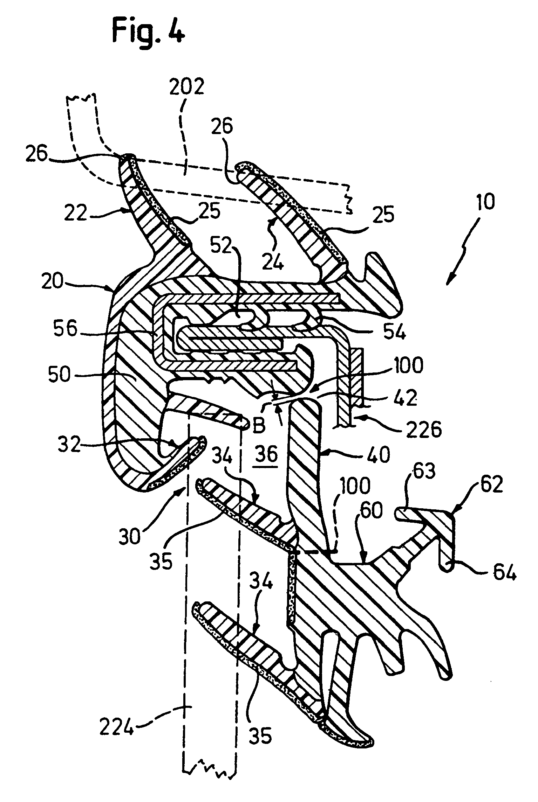

Wie insbesondere Fig. 4 zeigt, weist das Dichtungsprofil 10 einen ersten Dichtungsabschnitt 20, einen zweiten Dichtungsabschnitt 30, einen Verbindungsabschnitt 40 und einen Befestigungsabschnitt 50 auf. Der erste Dichtungsabschnitt 20 dient zur Abdichtung eines Spalts zwischen der hinteren Tür 220 und dem Dachabschnitt der Karosserie 202. Der zweite Dichtungsabschnitt 30 dient zur Abdichtung und Führung der beweglichen Fensterscheibe 224.

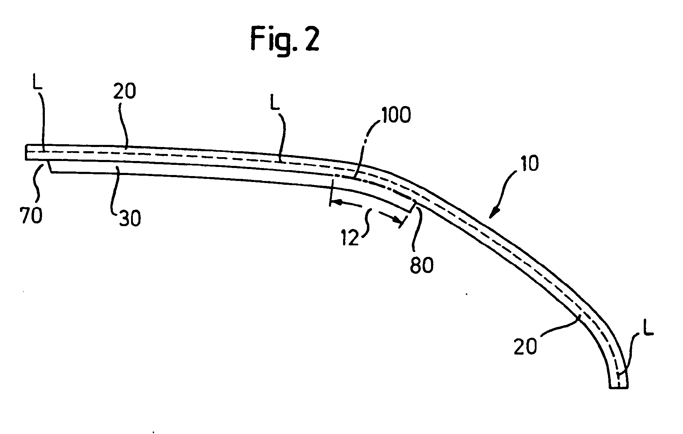

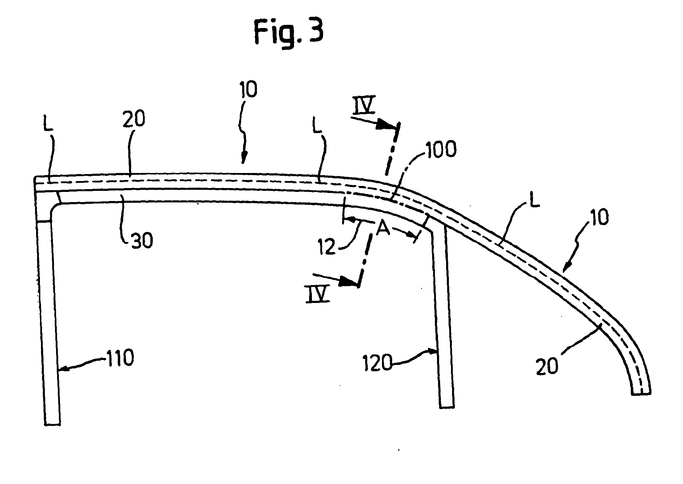

Wie die Figuren 2 und 3 zeigen, kann das Dichtungsprofil 10 mit weiteren Dichtungsprofilen 110 und 120 verbunden werden, wobei die weiteren Dichtungsprofile 110, 120 zur Abdichtung und/oder Führung der im Wesentlichen senkrecht verlaufenden Kanten der beweglichen Fensterscheibe 224 und/oder der feststehenden Fensterscheibe 222 dienen. Die Dichtungsprofile 110, 120 werden in Anschlussbereichen 70, 80 stoffschlüssig an dem Dichtungsprofil 10 angebracht. Die hierzu erforderlichen Verfahrensschritte werden weiter unten noch erläutert.

Wie aus Fig. 4 zu entnehmen ist, umfasst der erste Dichtungsabschnitt 20 eine, von der Außenseite des Kraftfahrzeugs 200 betrachtet, äußere Dichtlippe 22 und eine innere Dichtlippe 24, die jeweils ein freies Ende 26 zur Anlage an dem Dachabschnitt der Karosserie 202 aufweisen. Sowohl die äußere Dichtlippe 22 als auch die innere Dichtlippe 24 sind auf der im geschlossenen Zustand der Tür 220 an der Karosserie 202 anliegenden Innenseite mit einer reibungsvermindernden Beflockung 25 versehen, die ein Anhaften der Dichtlippen 22, 24 an der Karosserie 202 verhindert.

Der zweite Dichtungsabschnitt 30 dient zum Abdichten der beweglichen Fensterscheibe 214 und ist zugleich als Fensterführung ausgestaltet. Hierzu weist der zweite Dichtungsabschnitt 30 einen Kanal 36 auf, der den oberen Rand der Fensterscheibe 224 im geschlossenen Zustand aufnimmt. In diesem Kanal 36 sind wenigstens eine äußere Dichtlippe 32 und innere Dichtlippen 34 angeordnet, die im geschlossenen Zustand der Fensterscheibe 224 an dieser anliegen und auf der an der Fensterscheibe 224 anliegenden Seite mit einer reibungsvermindernden Beflockung 35 versehen sind.

Weiterhin gibt Fig. 4 zu erkennen, dass das Dichtungsprofil 10 zwischen dem ersten Dichtungsabschnitt 20 und dem zweiten Dichtungsabschnitt 30 den Befestigungsabschnitt 50 aufweist, der dazu dient, das Dichtungsprofil 10 an einem Flansch 226 der Tür 220 zu befestigen. Als weitere Befestigung umfasst das Dichtungsprofil 10 einen zweiten Befestigungsabschnitt 60, der das Dichtungsprofil 10 im Bereich des zweiten Dichtungsabschnitts 30 an der Tür befestigt.

Der erste Befestigungsabschnitt 50 weist eine kanalförmige Aussparung 52 auf, in die der Flansch 226 einsteckbar ist. Um einen zuverlässigen Kraftschluss zwischen dem ersten Befestigungsabschnitt 50 und dem Flansch 226 zu gewährleisten, sind in der Aussparung 52 Haltelippen 54 angeordnet. Darüber hinaus ist der erste Befestigungsabschnitt 50 durch einen Verstärkungsträger 56 armiert, der im Querschnitt U-förmig ist. Der Verstärkungsträger 56 kann beispielsweise aus einem metallenen Stanzband oder einem gebogenen Drahtwendelband bestehen.

Der zweite Befestigungsabschnitt 60 umfasst ein clipsartiges Befestigungsmittel 62 mit einem ersten Schenkel 63 und einem zweiten Schenkel 64. Die beiden Schenkel 63, 64 sind im Bereich deren freier Enden elastisch verformbar, so dass das Befestigungsmittel 62 beispielsweise durch eine Öff nung derart hindurch gesteckt werden kann, so dass die Schenkel 63, 64 den die Öffnung umgebenden Abschnitt hintergreifen.

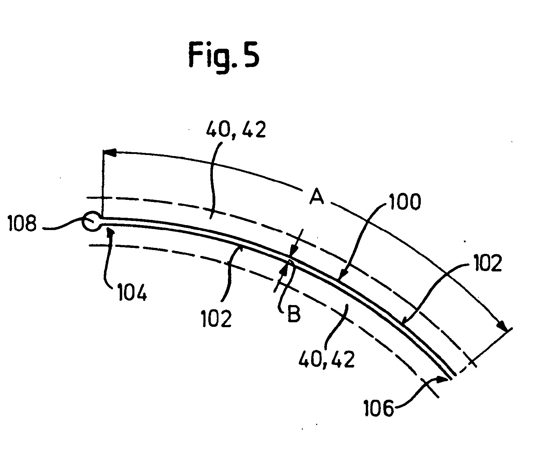

Das Dichtungsprofil 10 weist ferner einen Schlitz 100 auf. In Fig. 5 ist ein Zwischenstadium vor der stoffschlüssigen Anbindung des weiteren Dichtungsprofils 120 dargestellt. Der Schlitz 100 weist eine Umrandung 102 auf, erstreckt sich im Wesentlichen entlang der Längsrichtung L des Dichtungsprofils 10, ist in dem Biegeabschnitt 12 angeordnet und lagemäßig in den Figuren 2 bis 4 mittels einer strichpunktierten Linie angedeutet. Der Biegeabschnitt 12 befindet sich gemäß Fig. 1 und 3 benachbart zu dem weiteren Dichtungsprofil 120 im Bereich der Fensterscheibe 224. Fig. 4 stellt einen Schnitt durch das Dichtungsprofil 10 im Bereich des Schlitzes 100 in dem Biegeabschnitt 12 dar. Wie die Figuren 1 bis 3 erkennen lassen, liegt dort ein Wendepunkt hinsichtlich des gekrümmten Verlaufs entlang der Längsrichtung L vor. Gerade in diesem Bereich tritt bei Dichtungsprofilen nach dem Stand der Technik beim Biegen des extrudierten Dichtungsprofils 10 eine Wellenbildung auf, die zum einen von außerhalb des Kraftfahrzeugs 200 sichtbar ist und zum anderen die Dichtfunktion des Dichtungsprofils 10 beeinträchtigt.

Im Querschnitt betrachtet, ist der Schlitz 100 in dem Verbindungsabschnitt 40 (siehe Fig. 4), der auch einen Teilabschnitt des ersten Befestigungsabschnitts 50 oder des zweiten Befestigungsabschnitts 60 bilden kann, angeordnet. Der Schlitz 100 kann in einer Verengung 42 des Verbindungsabschnittes 40 angeordnet sein. Die Verengung 42 ermöglicht in den Bereichen entlang der Längsrichtung L, in welchen kein Schlitz 100 vorgesehen ist, eine gewisse Beweglichkeit des ersten Dichtungsabschnitts 20 und/oder des zweiten Dichtungsabschnitts 30, die eine leichtere Montage ermöglicht. Vorteilhafterweise kann der Schlitz 100 im Wesentlichen parallel und beabstandet zur neutralen Faser des Dichtungsprofils 10 vorgesehen sein.

Alternativ zu der Lage des Schnittes 100 im Bereich der Verengung 42 kann der Schlitz 100, wie in Fig. 4 mittels einer gestrichelten Linie eingezeichnet, bei einem weiteren Ausführungsbeispiel in einem unteren Abschnitt des Verbindungsabschnittes 40 angeordnet werden.

Wie Fig. 5 weiter zeigt, weist der Schlitz 100 zwei Endbereiche 104 und 106 auf, wobei in dem Endbereich 104 eine Ausnehmung 108 vorgesehen ist, die in den Schlitz 100 übergeht. Diese Ausnehmung 108 kann als eine Art Entspannungs- und/oder Stoppbohrung verstanden werden und verhindert ein über das Ende 104 hinausgehendes Aufreißen des Schlitzes 100. Der Schlitz 100 in dem Endbereich 106 ist in einem Zwischenstadium vor der stoffschlüssigen Anbindung des weiteren Dichtungsprofils 120 ein einseitig offener Schlitz, so dass der Endbereich 106 in diesem Zwischenstadium ein offenes Ende darstellt (siehe Fig. 5). Nach stoffschlüssigem Anschluss des weiteren Dichtungsprofils 120 ist der Endbereich 106 dann wieder geschlossen.

In bevorzugter Ausgestaltung weist der Schlitz eine Länge A von zwischen etwa 1 cm und etwa 20 cm, vorzugsweise zwischen etwa 5 cm und etwa 15 cm, auf. Die Breite B beträgt zwischen etwa 0,1 mm und etwa 10 mm, vorzugsweise zwischen etwa 0,5 mm und etwa 2,0 mm. Die Breite B kann über die Länge A des Schlitzes 100 variieren und daher als mittlere Breite verstanden werden. Bei einem weiteren bevorzugten Ausführungsbeispiel (nicht gezeigt) kann der Schlitz 100 mit dem Biegeabschnitt 12 überlappend und/oder in einem vorbestimmten Abstand von dem Biegeabschnitt 12 entfernt vorgesehen werden.

Nachfolgend wird ein Verfahren zur Herstellung des Dichtungsprofils 10 erläutert.

In einem ersten Schritt wird das Dichtungsprofil 10 aus einem elastomeren Werkstoff extrudiert. Anschließend wird, beispielsweise mittels eines Schneidmessers, eines Stanzmittels, mittels Bohren oder Fräsen der Schlitz 100 mit einer vorbestimmten Länge A und Breite B und an einer vorbestimmten Stelle entlang der Längsrichtung L in einer bestimmten Position relativ zu dem Biegeabschnitt 12 in den Verbindungsabschnitt 40 im Bereich der Verengung 42 eingebracht. Hierbei erstreckt sich der Schlitz 100 im Wesentlichen in der Längsrichtung L. Im gezeigten Ausführungsbeispiel hat der Schlitz 100 eine Länge A, die im Wesentlichen dem in einem späteren Verfahrensabschnitt gebogenen Biegeabschnitt 12 entspricht. Der Schlitz 100 ist in dem Endbereich 106 so eingebracht, dass er einseitig offen ausgebildet ist. Der Endbereich 106 stellt in diesem Zwischenstadium ein offenes Ende dar.

Beim Einsatz eines Stanzmittels zum Einbringen des Schlitzes 100 kann durch eine entsprechende Ausbildung des Stanzmittels zugleich die Ausnehmung 108 beziehungsweise die Ausnehmungen 108 eingebracht werden. Für den Fall, dass ein Schneidmesser zum Einschneiden des Schlitzes 100 verwendet wird, kann die Einbringung der Ausnehmung(en) 108 im Anschluss daran mittels eines Stanzmittels erfolgen.

Nachdem der Schlitz 100 (oder gegebenenfalls auch mehrere Schlitze 100 in mehreren Biegeabschnitten 12) in das Dichtungsprofil 10 eingebracht worden sind, wird das Dichtungsprofil 10 im Bereich des Biegeabschnitts 12 und somit im Bereich des Schlitzes 100 mittels einer Biegevorrichtung in die gewünschte Form gebogen. Hierzu kann das Dichtungsprofil 10 vor oder nach dem Einbringen des Schlitzes 100 in eine entsprechende Biegeanlage gebracht werden. Wahlweise vor oder nach dem Biegevorgang kann ein Zuschneiden des Dichtungsprofils 10 hinsichtlich seiner gewünschten Länge in der Längsrichtung L und zum Entfernen von Reststücken erfolgen. Danach kann das nun eine für die spätere Montage an der Karosserie 202 vorgebogene Dichtungsprofil 10 mit den bereits oben erläuterten weiteren Dichtungsprofilen 110, 120 verbunden werden. Hierzu werden die vorab extrudierten Dichtungsprofile 110, 120 und das Dichtungsprofil 10 in ein entsprechendes Formwerkzeug derart eingelegt, dass in den Anschlussbereichen 70, 80 eine Formmasse derart eingespritzt werden kann, dass eine stoffschlüssige Verbindung zwischen dem Dichtungsprofil 110 und dem Dichtungsprofil 10 sowie zwischen dem Dichtungsprofil 120 und dem Dichtungsprofil 10 erreicht werden kann. Die Dichtungsprofile 110, 120 werden im Wesentlichen in einer Richtung quer zur Längsrichtung L angeschlossen, so dass das Dichtungsprofil 110 die senkrechten Kanten der beweglichen Fensterscheibe 224 und das Dichtungsprofil 120 die senkrechten Kanten der beweglichen Fensterscheibe 224 und der feststehenden Fensterscheibe 222 abdichten kann. Nach Anschluss der Dichtungsprofile 110, 120 ist der Schlitz nicht mehr einseitig offen, sondern entlang seiner Umrandung 102 allseitig von dem Material des Dichtungsprofils 10 und/oder der weiteren Dichtungsprofile 110, 120 begrenzt.

Das oben beschriebene Dichtungsprofil 10 zeichnet sich im Wesentlichen dadurch aus, dass beim Biegen des extrudierten Dichtungsprofils 10 infolge des eingebrachten Schlitzes 100 keine Wellenbildung auftritt. Damit wird auch eine unerwünschte Verformung der von der Außenseite des Kraftfahrzeugs erkennbaren Dichtlippen vermieden. Die Dichtfunktion kann erfüllt werden. Ebenso wird ein Einfallen der Dichtungsabschnitte zumindest teilweise verhindert. Schließlich wird eine einfache Montage des vorgebogenen Dichtungsprofils in einem automatisierten Prozess möglich.

### Bezugszeichenliste

- 10: Dichtungsprofil
- 12: Biegeabschnitt

- 20: erster Dichtungsabschnitt
- 22: äußere Dichtlippe
- 24: innere Dichtlippe
- 25: Beflockung
- 26: freies Ende

- 30: zweiter Dichtungsabschnitt
- 32: äußere Dichtlippe
- 34: innere Dichtlippe
- 35: Beflockung
- 36: Kanal

- 40: Verbindungsabschnitt
- 42: Verengung

- 50: erster Befestigungsabschnitt
- 52: Aussparung
- 54: Haltelippe
- 56: Verstärkungsträger

- 60: zweiter Befestigungsabschnitt
- 62: Befestigungsmittel
- 63: Schenkel
- 64: Schenkel
- 70: Anschlussbereich
- 80: Anschlussbereich

- 100: Schlitz
- 102: Umrandung
- 104: Endbereich
- 106: Endbereich
- 108: Ausnehmung

- 110: weiteres Dichtungsprofil

- 120: weiteres Dichtungsprofil

- 200: Kraftfahrzeug
- 202: Karosserie

- 210: vordere Tür
- 212: feststehende Fensterscheibe
- 214: bewegliche Fensterscheibe

- 220: hintere Tür
- 222: feststehende Fensterscheibe
- 224: bewegliche Fensterscheibe
- 226: Flansch

- A: Länge
- B: Breite

- L: Längsrichtung

## Patentansprüche

1. Dichtungsprofil für ein Kraftfahrzeug (200), das mittels Extrusion gefertigt ist und sich in einer Längsrichtung (L) erstreckt, umfassend:
einen ersten Dichtungsabschnitt (20), der bei geschlossener Tür an der Karosserie (202) des Kraftfahrzeugs (200) anliegt;
einen zweiten Dichtungsabschnitt (30), der zur Abdichtung und/oder zur Führung einer Fensterscheibe (214, 224) dient;
einen ersten Befestigungsabschnitt (50), der an einem Flansch (226) einer Tür (210, 220) festlegbar ist;
einen zweiten Befestigungsabschnitt (60), der das Dichtungsprofil (10) im Bereich des zweiten Dichtungsabschnitts (30) an der Tür befestigt,
einen zwischen dem ersten Befestigungsabschnitt (50) und dem zweiten Befestigungsabschnitt (60) vorgesehenen Verbindungsabschnitt (40); und
einen sich im Wesentlichen in der Längsrichtung (L) erstreckenden Schlitz (100),
wobei der Schlitz (100) wenigstens abschnittsweise im Bereich eines mittels Biegung geformten Biegeabschnittes (12) in den Verbindungsabschnitt (40) eingebracht ist.

2. Dichtungsprofil nach Anspruch 1, **dadurch gekennzeichnet, dass** der Schlitz (100) allseitig begrenzt ist.

3. Dichtungsprofil nach Anspruch 1 oder 2, **dadurch gekennzeichnet, dass** der Schlitz (100) im Wesentlichen parallel und im Abstand zur neutralen Faser des Dichtungsprofils (10) angeordnet ist.

4. Dichtungsprofil nach einem der Ansprüche 1 bis 3, **dadurch gekennzeichnet, dass** der Schlitz (100) über eine vorbestimmte Länge in dem Biegeabschnitt (12) in einem vorbestimmten Abstand von dem Biegeabschnitt (12) entfernt und/oder mit dem Biegeabschnitt (12) überlappend eingebracht ist.

5. Dichtungsprofil nach einem der Ansprüche 1 bis 4, **dadurch gekennzeichnet, dass** in wenigstens einem Endbereich (104, 106) des Schlitzes (100) eine in den Schlitz (100) übergehende Ausnehmung (108) eingebracht ist.

6. Dichtungsprofil nach einem der Ansprüche 1 bis 5, **dadurch gekennzeichnet, dass** der Schlitz (100) eine Länge (A) von zwischen etwa 1 cm und etwa 20 cm, vorzugsweise zwischen etwa 5 cm und etwa 15 cm, aufweist.

7. Dichtungsprofil nach einem der Ansprüche 1 bis 6, **dadurch gekennzeichnet, dass** der Schlitz (100) eine vorbestimmte Breite (B) aufweist, wobei die Breite (B) zwischen etwa 0,1 mm und etwa 10,0 mm, vorzugsweise zwischen etwa 0,5 mm und etwa 2,0 mm, beträgt.

8. Verfahren zur Herstellung eines Dichtungsprofils (10) für ein Kraftfahrzeug (200) nach einem der Ansprüche 1 bis 7, umfassend folgende Verfahrensschritte:
das Dichtungsprofil (10) wird aus einem elastomeren Werkstoff extrudiert;
wenigstens abschnittsweise wird im Bereich eines mittels Biegung zu formenden Biegeabschnittes (12) des Dichtungsprofils (10) wenigstens ein Schlitz (100) eingebracht;
der Schlitz (100) wird in einer sich im Wesentlichen in der Längsrichtung (L) erstreckenden Richtung in den Verbindungsabschnitt (40) eingebracht und
das Dichtungsprofil (10) wird im Bereich des Biegeabschnittes (12) in die gewünschte Form gebogen.

9. Verfahren nach Anspruch 8, **dadurch gekennzeichnet, dass** der Schlitz (100) im Wesentlichen parallel und im Abstand zur neutralen Faser des Dichtungsprofils (10) eingebracht wird.

10. Verfahren nach Anspruch 8 oder 9, **dadurch gekennzeichnet, dass** der Schlitz (100) über eine vorbestimmte Länge (A) in dem Biegeabschnitt (12) in einem vorbestimmten Abstand von dem Biegeabschnitt (12) entfernt und/oder mit dem Biegeabschnitt (12) überlappend eingebracht wird.

11. Verfahren nach einem der Ansprüche 8 bis 10, **dadurch gekennzeichnet, dass** in wenigstens einem Endbereich (104, 106) des Schlitzes (100) eine in den Schlitz (100) übergehende Ausnehmung (108) eingebracht wird.

12. Verfahren nach einem der Ansprüche 8 bis 11, **dadurch gekennzeichnet, dass** der Schlitz (100) mittels eines Schneidmessers eingeschnitten, mittels Stanzen, mittels Fräsen oder mittels Bohren eingebracht wird.

13. Verfahren nach einem der Ansprüche 8 bis 12, **dadurch gekennzeichnet, dass** der Schlitz (100) in einem Anschlussbereich (70, 80) des Dichtungsprofils (10) als einseitig offener Schlitz mit einem offenen Ende (106) eingebracht wird und anschließend das Dichtungsprofil (10) in dem Anschlussbereich (70, 80) mit wenigstens einem weiteren Dichtungsprofil (110, 120) verbunden wird, wobei das offene Ende (106) des Schlitzes (100) geschlossen wird.

14. Verfahren nach einem der Ansprüche 8 bis 13, **dadurch gekennzeichnet, dass** das Dichtungsprofil (10) und wenigstens ein weiteres Dichtungsprofil (110, 120) in ein Formwerkzeug eingelegt werden und zum Verbinden des weiteren Dichtungsprofils (110, 120) mit dem Dichtungsprofil (10) eine Formmasse eingespritzt wird.

15. Verfahren nach einem der Ansprüche 8 bis 13, **dadurch gekennzeichnet, dass** das Dichtungsprofil (10) in ein Formwerkzeug eingelegt wird und in einem Anschlussbereich (70, 80) des Dichtungsprofils (10) ein Formteil an das Dichtungsprofil (10) angespritzt wird.

16. Verfahren nach einem der Ansprüche 8 bis 15, **dadurch gekennzeichnet, dass** der Schlitz (100) eine Länge (A) von zwischen etwa 1 cm und etwa 20 cm, vorzugsweise zwischen etwa 5 cm und etwa 15 cm, aufweist.

17. Verfahren nach einem der Ansprüche 8 bis 16, **dadurch gekennzeichnet, dass** der Schlitz (100) eine vorbestimmte Breite (B) aufweist, wobei die Breite (B) zwischen etwa 0,1 mm und etwa 10,0 mm, vorzugsweise zwischen etwa 0,5 mm und etwa 2,0 mm, beträgt.

## Claims

1. A sealing profile for a motor vehicle (200) which is produced by extrusion and extends in a longitudinal direction (L), comprising:
a first sealing section (20) which abuts against the bodywork (202) of the motor vehicle (200) when the door is closed;
a second sealing section (30) which serves to seal and/or to guide a window pane (214, 224);
a first fastening section (50) which can be affixed to a flange (226) of a door (210, 220);
a second fastening section (60) which affixes the sealing profile (10) in the area of the second sealing section (30) to the door (210, 220);
a connecting section (40) provided between the first fastening section (50) and
the second fastening section (60); and
a slot (100) which extends in an essentially longitudinal direction (L),
wherein the slot (100) is introduced into the connecting section (40) at least over a section in the area of the curved section (12) formed by means of bending.

2. A sealing profile according to claim 1 **characterised in that** the slot (100) is limited in all directions.

3. A sealing profile according to claim 1 or 2, **characterised in that** the slot (100) is arranged essentially parallel to and at a distance from the neutral fibres of the sealing profile (10).

4. A sealing profile according to one of the claims 1 to 3, **characterised in that** the slot (100) is introduced over a predetermined length in the curved section (12) and at a predetermined distance from the curved section (12) and /or overlaps with the curved section (12).

5. A sealing profile according to one of the claims 1 to 4, **characterised in that** at least at one end portion (104, 106) of the slot (100), a recess (108) is provided which extends into the slot (100).

6. A sealing profile according to one of the claims 1 to 5, **characterised in that** the slot (100) has a length (A) of between about 1 cm and about 20 cm, preferably between about 5 cm and about 15 cm.

7. A sealing profile according to one of the claims 1 to 6, **characterised in that** the slot (100) has a predetermined breadth (B) wherein the breadth (B) is between about 0.1 mm and 10.0 mm, preferably between about 0.5 mm and about 2.0 mm

8. Method for manufacturing a sealing profile (10) for a motor vehicle (200) according to one of the claims 1 to 7 comprising the following procedural steps:
the sealing profile (10) is made by extrusion of an elastomeric material;
at least one slot (100) is introduced into the sealing profile (10) over at least a section of the area of a curved section (12) to be formed by bending;
the slot (100), extending in an essentially longitudinal direction (L), is introduced into the connecting section (40) and
the sealing profile (10) is bent into the desired shape in the area of the curved section (12).

9. Method according to claim 8, **characterised in that** the slot (100) is introduced essentially parallel to and at a distance from the neutral fibres of the sealing profile (10)

10. Method according to claim 8 or 9, **characterised in that** the slot (100) is introduced over a predetermined length (A) into the curved section (12) at a predetermined distance from the curved section (12) and/or overlapping with the curved section (12)

11. Method according to one of the claims 8 to 10, **characterised in that** at least at one end portion (104,106) of the slot (100), a recess (108) is provided which extends into the slot (100)

12. Method according to one of the claims 8 to 11 **characterised in that** the slot (100) is introduced by means of a cutting with a knife, by means of punching, by means of machine cutting or by means of milling.

13. Method according to one of the claims 8 to 12, **characterised in that** the slot (100) in a connecting area (70, 80) of the sealing profile (10) is introduced as a slot open on one side with an open end (106) and subsequently the sealing profile (10) is connected to at least one further sealing profile (110, 120) in the connecting area (70, 80) in this way closing the open end (106) of the slot (100).

14. Method according to one of the claims 8 to 13, **characterised in that** the sealing profile (10) and at least one further sealing profile (110, 120) are placed in a moulding tool and a moulding compound is injected into the tool to connect the further sealing profile (110, 120) to the sealing profile (10).

15. Method according to one of the claims 8 to 13, **characterised in that** the sealing profile (10) is placed in a moulding tool and at one connecting area (70, 80) of the sealing profile (10) a moulded part is injected onto the sealing profile (10).

16. Method according to one of the claims 8 to 15, **characterised in that** the slot (100) has a length (A) of between about 1 cm and about 20 cm, preferably between about 5 cm and about 15 cm.

17. Method according to one of the claims 8 to 16, **characterised in that** the slot (100) has a predetermined breadth (B) wherein the breadth (B) is between about 0.1 mm and about 10.0 mm, preferably between about 0.5 mm and about 2.0 mm.

## Revendications

1. Profilé d'étanchéité pour un véhicule automobile (200), qui est fabriqué par extrusion et s'étend dans une direction longitudinale (L), comprenant :
une première portion d'étanchéité (20) qui, lorsque la porte est fermée,
s'applique contre la carrosserie (202) du véhicule (200) ;
une seconde portion d'étanchéité (30) qui sert à l'étanchement et/ou au guidage d'une vitre de fenêtre (214, 224) ;
une première portion de fixation (50), qui peut être immobilisée sur une bride (226) d'une porte (210, 220) ;
une seconde portion de fixation (60), qui fixe le profilé d'étanchéité (10) sur la porte dans la zone de la seconde portion d'étanchéité (30) ;
une portion de liaison (40) prévue entre la première portion de fixation (50) et la seconde portion de fixation (60) ; et
une fente (100) s'étendant essentiellement en direction longitudinale (L),
ladite fente (100) étant ménagée au moins par tronçon dans la portion de liaison (40) dans la zone d'un tronçon cintré (12) formé par cintrage.

2. Profilé d'étanchéité selon la revendication 1, **caractérisé en ce que** la fente (100) est limitée sur tous les côtés.

3. Profilé d'étanchéité selon la revendication 1 ou 2, **caractérisé en ce que** la fente (100) est agencée essentiellement parallèlement et à distance de la fibre neutre du profilé d'étanchéité (10).

4. Profilé d'étanchéité selon l'une des revendications 1 à 3, **caractérisé en ce que** la fente (100) est ménagée sur une longueur prédéterminée dans le tronçon cintré (12) éloignée à une distance prédéterminée du tronçon cintré (12) et/ou en chevauchement avec le tronçon cintré (12).

5. Profilé d'étanchéité selon l'une des revendications 1 à 4, **caractérisé en ce qu'**un évidement (108) qui se transforme dans la fente (100) est ménagé dans au moins une zone terminale (104, 106) de la fente (100).

6. Profilé d'étanchéité selon l'une des revendications 1 à 5, **caractérisé en ce que** la fente (100) a une longueur (A) entre environ 1 cm et environ 20 cm, de préférence entre environ 5 cm et environ 15 cm.

7. Profilé d'étanchéité selon l'une des revendications 1 à 6, **caractérisé en ce que** la fente (100) a une largeur prédéterminée (B), ladite largeur (B) étant entre environ 0,1 mm et environ 10,0 mm, de préférence entre environ 0,5 mm et environ 2,0 mm.

8. Procédé pour la fabrication d'un profilé d'étanchéité (10) pour un véhicule automobile (200) selon l'une des revendications 1 à 7, comprenant les étapes suivantes :
le profilé d'étanchéité (10) est extrudé à partir d'un matériau élastomère ;
au moins une fente (100) est ménagée au moins par tronçon dans la zone d'un tronçon cintré (12), à former par cintrage, du profilé d'étanchéité (10) ;
la fente (100) est ménagée dans la portion de liaison (40) dans une direction qui s'étend essentiellement en direction longitudinale (L) ; et
le profilé d'étanchéité (10) est cintré dans la forme souhaitée dans la zone du tronçon cintré (12).

9. Procédé selon la revendication 8, **caractérisé en ce que** la fente (100) est ménagée essentiellement parallèlement et à distance de la fibre neutre du profilé d'étanchéité (10).

10. Procédé selon la revendication 8 ou 9, **caractérisé en ce que** la fente (100) est ménagée sur une longueur prédéterminée (A) dans le tronçon cintré (12) en éloignement d'une distance prédéterminée du tronçon cintré (12) et/ou en chevauchement avec le tronçon cintré (12).

11. Procédé selon l'une des revendications 8 à 10, **caractérisé en ce qu'**un évidement (108) qui se transforme dans la fente (100) est ménagé dans au moins une zone terminale (104, 106) de la fente (100).

12. Procédé selon l'une des revendications 8 à 11, **caractérisé en ce que** la fente (100) est ménagée par découpe au moyen d'un couteau de coupe, par poinçonnage, par fraisage ou par perçage.

13. Procédé selon l'une des revendications 8 à 12, **caractérisé en ce que** la fente (100) est ménagée dans une zone de raccordement (70, 80) du profilé d'étanchéité (10) sous forme de fente ouverte d'un côté avec une extrémité ouverte (106), et ensuite le profilé d'étanchéité (10) est relié dans la zone de raccordement (70, 80) à au moins un autre profilé d'étanchéité (110, 120), de sorte que l'extrémité ouverte (106) de la fente (100) est fermée.

14. Procédé selon l'une des revendications 8 à 13, **caractérisé en ce que** le profilé d'étanchéité (10) et au moins un autre profilé d'étanchéité (110, 120) sont placés dans un outil de mise en forme et on injecte une masse de formage pour relier l'autre profilé d'étanchéité (110, 120) avec le profilé d'étanchéité (10).

15. Procédé selon l'une des revendications 8 à 13, **caractérisé en ce que** le profilé d'étanchéité (10) est mis en place dans un outil de mise en forme et une partie moulée est injectée contre le profilé d'étanchéité (10) dans une zone de raccordement (70, 80) du profilé d'étanchéité (10).

16. Procédé selon l'une des revendications 8 à 15, **caractérisé en ce que** la fente (100) a une longueur (A) entre environ 1 cm et environ 20 cm, de préférence entre environ 5 cm et environ 15 cm.

17. Procédé selon l'une des revendications 8 à 16, **caractérisé en ce que** la fente (100) a une largeur prédéterminée (B), ladite largeur (B) étant entre environ 0,1 mm et environ 10,0 mm, de préférence entre environ 0,5 mm et environ 2,0 mm.
